# EUROPÄISCHE PATENTSCHRIFT

(11) **EP 2 746 587 B1**
(45) Veröffentlichungstag und Bekanntmachung des Hinweises auf die Patenterteilung: **14.09.2016**
(21) Anmeldenummer: 13195736.7
(22) Anmeldetag: 04.12.2013
(51) Int. Cl.: F16C 23/06, F04D 19/04, F04D 29/059, F04D 29/64

(54) **Vakuumpumpe**
Vacuum pump
Pompe à vide

(30) Priorität: 20.12.2012 DE 102012224070
(43) Veröffentlichungstag der Anmeldung: 25.06.2014
(73) Patentinhaber: PFEIFFER VACUUM GMBH, 35614 Asslar (DE)
(72) Erfinder: Schill, Michael, 35614 Asslar-Bechlingen (DE)
(74) Vertreter: Manitz, Finsterwald & Partner GbR

(56) Entgegenhaltungen:
- GB-A- 242 084
- US-A- 3 749 528
- US-A- 4 966 474
- US-A1- 2012 219 403

## Beschreibung

Die vorliegende Erfindung betrifft eine Lagerfassung für ein insbesondere als Wälzlager ausgebildetes Drehlager, in dem ein Rotorwelle eines Rotors einer Pumpe um eine Achse drehbar gelagert ist. Die Erfindung betrifft weiter eine Vakuumpumpe, insbesondere Turbomolekularpumpe, mit einer solchen Lagerfassung.

Vakuumpumpen wie z.B. Turbomolekularpumpen, die sich zum Erzeugen eines hochreinen Vakuums eignen, umfassen typischerweise einen Rotor, der bei dem Betrieb der Pumpe mit einer hohen Drehzahl drehend angetrieben wird. Der Rotor ist dabei an seinem dem Pumpenauslass zugewandten vorvakuumseitigen Ende üblicherweise durch ein Wälzlager drehbar gelagert, welches zum Zweck einer hochpräzisen Positionierung und mechanisch stabilen Halterung in einer mit dem Pumpengehäuse verbundenen Lagerfassung aufgenommen ist.

Bekannte Lagerfassungen umfassen ein Aufnahmeteil und ein Deckelteil, die miteinander verschraubbar sind und in einer verschraubten Sollstellung gemeinsam einen Aufnahmeraum für das Drehlager begrenzen. Es ist bekannt, das Aufnahmeteil und das damit verschraubte Deckelteil einer Lagerfassung in einer gewünschten Sollstellung miteinander zu verkleben, um dadurch ein nachträgliches Verdrehen der beiden Teile zu verhindern. Die Sollstellung, in der die Fassungsteile fixiert werden, bestimmt den Abstand der beiden Fassungsteile in Richtung der Verschraubungsachse und beeinflusst folglich eine Freistellung des Drehlagers, d.h. das Ausmaß eines ggf. vorhandenen Spiels zwischen der Lagerfassung und dem Drehlager. Diese Lagerfreistellung wirkt sich auf die Lagereigenschaften des Drehlagers aus und ist geeignet einzustellen, um die gewünschten Laufeigenschaften der Pumpe zu erzielen.

Die Gewährleistung einer zuverlässigen Fixierung durch eine Verklebung ist aufwendig, da der Kleber bis zu 6 Stunden oder länger trocknen muss, bevor mit der Montage der Vakuumpumpe fortgefahren oder die Vakuumpumpe in Betrieb genommen werden kann, da ansonsten die Gefahr eines Lösens der Klebeverbindung besteht. Femer müssen die Klebeflächen zur Herstellung einer zuverlässigen Klebeverbindung absolüt ölfrei sein, was insbesondere bei der Verwendung eines geschmierten Drehlagers schwierig zu bewerkstelligen ist und aufwendige Reinigungsschritte erfordert.

Zudem lässt sich die Lagerfassung nur mit hohem Aufwand auseinanderbauen und wieder zusammenbauen, da dazu die Klebeverbindung gelöst, die Fassungsteile von Kleberresten gereinigt und die Klebeverbindung wiederhergestellt werden muss. Der damit verbundene Aufwand steht einer Wiederverwendung einer einmal eingebauten Lagerfassung entgegen, beispielsweise im Falle eines negativen Funktionstests einer Pumpe.

Ferner ist eine genaue Einstellung einer gewünschten Lagerfreistellung mit den bekannten Lagerfassungen nur schwer möglich, da ein Nachjustieren einer einmal eingestellten Lagerfreistellung zum Zweck einer Feinjustierung nicht möglich ist.

Aus der US 3,749,528 A sind eine Vakuumpumpe, eine Lagerfassung und ein Verfahren gemäß dem Oberbegriff der Ansprüche 1, 13 und 15 bekannt.

Aufgabe der Erfindung ist es daher, eine Vakuumpumpe, insbesondere eine Turbomolekularpumpe, mit einer Lagerfassung anzugeben, welche die vorstehenden Nachteile überwindet, welche eine stabile und zuverlässige Halterung des Drehlagers gewährleistet, welche gleichzeitig mit geringem Aufwand bereitgestellt werden kann und welche insbesondere eine präzise und einfache Einstellung einer Freistellung des in der Lagerfassung aufgenommenen Drehlagers ermöglicht.

Die Aufgabe wird durch eine Vakuumpumpe mit den Merkmalen des Anspruchs 1 gelöst.

Die Lagerfassung der Vakuumpumpe umfasst ein Aufnahmeteil und ein Deckelteil, die, insbesondere durch Verschrauben, gegeneinander verdrehbar sind und zumindest in einer Sollstellung gemeinsam einen Aufnahmeraum für das Drehlager begrenzen. Es ist eine Sicherungseinrichtung zur Herstellung einer mechanischen Verbindung zwischen dem Aufnahmeteil und dem Deckelteil vorgesehen, welche eine gegenseitige Verdrehung des Aufnahmeteils und des Deckelteils verhindert.

Erfindungsgemäß umfasst die Sicherungseinrichtung zumindest ein Verbindungselement, welches gleichzeitig sowohl mit dem Aufnahmeteil als auch mit dem Deckelteil mechanisch verbindbar ist, um die mechanische Verbindung zwischen dem Aufnahmeteil und dem Deckelteil herzustellen.

Da die Sicherungseinrichtung das Aufnahmeteil und das Deckelteil in der Sollstellung hält, ist keine Verklebung zwischen dem Aufnahmeteil und dem Deckelteil notwendig, um die Lagerfassung in der Sollstellung zu sichern. Die Lagerfassung kann nach dem Herstellen der mechanischen Verbindung zwischen dem Aufnahmeteil und dem Deckelteil sofort in die Vakuumpumpe eingebaut und die Pumpe in Betrieb genommen werden, ohne dass eine Trocknungszeit abgewartet werden muss. Durch die mechanische Verbindung lässt sich selbst bei dem Vorhandensein von Ölspuren auf dem Aufnahmeteil oder Deckelteil eine zuverlässige Sicherung gegen Verdrehen gewährleisten, ohne dass aufwendige Reinigungsschritte erforderlich sind. Die mechanische Verbindung ermöglicht außerdem die genaue und reproduzierbare Einstellung einer gewünschten Sollstellung zwischen Aufnahmeteil und Deckelteil, so dass sich bei dem Einbau der Lagerfassung und des Drehlagers in eine Vakuumpumpe die gewünschten Lager- und Laufeigenschaften erreichen lassen.

Vorteilhafte Ausführungsformen der Erfindung sind in der Beschreibung, den Unteransprüchen und den Figuren beschrieben.

Bevorzugt ist die mechanische Verbindung in verschiedenen Sollstellungen des Aufnahmeteils und des Deckelteils herstellbar. Dadurch wird es ermöglicht, eine gewünschte Lagerfreistellung einzustellen und/oder die Lagerfassung an die Dimensionierung eines verwendeten Lagers anzupassen. Die unterschiedlichen Sollstellungen sind vorzugsweise durch verschiedene relative Drehstellungen des Aufnahmeteils und des Deckelteils in Bezug auf die Drehachse gebildet, um die das Aufnahmeteil und das Deckelteil verdrehbar und insbesondere verschraubbar sind. Beispielsweise kann ein axialer Abstand zwischen dem Aufnahmeteil und dem Deckelteil und damit eine axiale Freistellung bzw. ein axiales Spiel des Lagers dadurch eingestellt werden, dass das Aufnahmeteil und das Deckelteil so weit miteinander verschraubt werden, dass sich der gewünschte axiale Abstand ergibt. Durch Fixieren der beiden Teile gegen Verdrehen mittels der mechanischen Verbindung kann die relative Positionierung der verschraubten Teile anschließend gesichert werden.

Die Sicherungseinrichtung kann derart eingerichtet sein, dass die mechanische Verbindung in mehreren diskreten Sollstellungen des Aufnahmeteils und des Deckelteils herstellbar ist, wobei ein auf die Drehachse bezogener Winkelabstand zweier Sollstellungen beispielsweise höchstens 20° und bevorzugt höchstens 5° betragen kann. Dadurch wird eine feine Einstellung der gegenseitigen Drehstellung des Aufnahmeteils und des Deckelteils ermöglicht. Die Sicherungseinrichtung kann auch so eingerichtet sein, dass die gegenseitige Stellung von Aufnahmeteil und Deckelteil zumindest über einen bestimmten Drehwinkelbereich hinweg stufenlos einstellbar ist. Dadurch wird eine noch feinere und genauere Einstellung der Relativpositionierung und insbesondere einer damit korrespondierenden Lagerfreistellung ermöglicht.

Neben zumindest einer für die Halterung eines Drehlagers während des Betriebs geeigneten Sollstellung kann die mechanische Verbindung auch in zumindest einer Nicht-Sollstellung herstellbar sein, beispielsweise in einer für den Transport oder die Aufbewahrung der Fassung geeigneten Stellung. Die Sicherung kann dabei in erster Linie dazu dienen, das Aufnahmeteil und das Deckelteil verliersicher und gegen unerwünschte Relativbewegungen gesichert aneinander zu fixierten.

Vorzugsweise ist die mechanische Verbindung lösbar. Insbesondere kann die mechanische Verbindung wiederholt herstellbar und wieder lösbar sein. Dadurch wird es ermöglicht, die Lagerfassung mit geringem Aufwand wieder zu verwenden. Im Gegensatz zu einer klebewirksamen oder stoffschlüssigen Verbindung kann die mechanische Verbindung rückstandsfrei herstellbar und wieder lösbar ausgestaltet werden. Wenn die mechanische Verbindung wie vorstehend beschrieben in verschiedenen Sollstellungen des Aufnahmeteils und des Deckelteils herstellbar ist, wird ferner ein nachträgliches Justieren bzw. Feineinstellen der gegenseitigen Stellung von Aufnahmeteil und Deckelteil und damit der Lagerfreistellung ermöglicht, indem die mechanische Verbindung gelöst und in einer anderen Sollstellung wieder hergestellt wird.

Die mechanische Verbindung kann auch in einer Nicht-Sollstellung herstellbar und wieder lösbar sein, wodurch es ermöglicht wird, die mechanische Verbindung während eines Transports oder der Aufbewahrung der Fassung zur Fixierung der Fassungsteile aneinander zu nutzen und die Verbindung im Zuge des betriebsfertigen Zusammenbaus der Fassung zu lösen und in einer Sollstellung der Fassung wieder herzustellen.

Bei der mechanischen Verbindung kann es sich um eine formschlüssige oder eine kraftschlüssige, insbesondere reibschlüssige, Verbindung handeln. Dadurch lässt sich eine zuverlässige Sicherung der Fassung in der Sollstellung gewährleisten. Zusätzlich kann eine stoffschlüssige bzw. klebewirksame Verbindung zur Verhinderung einer Verdrehung vorgesehen sein, wobei allerdings bevorzugt vollständig auf eine Verklebung zwischen dem Aufnahmeteil und dem Deckelteil verzichtet wird.

Bevorzugt ist das Verbindungselement zur Herstellung einer Form- oder Kraftschlussverbindung zwischen dem Aufnahmeteil und dem Deckelteil ausgebildet.

Eine besonders zuverlässige Sicherung ergibt sich, wenn das Verbindungselement dazu ausgebildet ist, mit dem Aufnahmeteil und/oder mit dem Deckelteil ein Formschlussverbindung zu bilden, da eine solche Verbindung mechanisch besonders stabil und zudem annähernd verschleißfrei wirksam ist.

Gemäß einer vorteilhaften Ausführungsform ist das Verbindungselement mit dem Aufnahmeteil und/oder mit dem Deckelteil in verschiedenen Winkelpositionen verbindbar, um die mechanische Verbindung herzustellen. Die verschiedenen Winkelpositionen sind dabei in Bezug auf die Drehachse definiert, um die das Aufnahmeteil und das Deckelteil gegeneinander verdrehbar, insbesondere verschraubbar, sind, d.h. dass die mechanische Verbindung in verschiedenen Drehstellungen des Aufnahmeteils relativ zu dem Deckelteil herstellbar ist.

Beispielsweise kann ein Fassungsteil mehrere, in verschiedenen Winkelpositionen angeordnete Formschlussmittel wie z.B. Ausnehmungen oder Vorsprünge aufweisen, mit denen das Fassungsteil jeweils formschlüssig mit dem Verbindungselement verbindbar ist.

Gemäß einer Ausführungsform ist das insbesondere stiftartige Verbindungselement dazu ausgebildet, sowohl mit dem Aufnahmeteil als auch mit dem Deckelteil eine Formschlussverbindung zu bilden. Das Aufnahmeteil und/oder das Deckelteil kann dabei jeweils eine oder mehrere in verschiedenen Winkelpositionen angeordnete Ausnehmungen für das Verbindungselement aufweisen. Eine Ausnehmung kann sich insbesondere in axialer Richtung in das jeweilige Teil hinein oder durch das jeweilige Teil hindurch erstrecken. Dadurch lässt sich eine mechanisch besonders stabile mechanische Verbindung erzeugen, die in einer Vielzahl von verschiedenen Sollstellungen von Aufnahmeteil und Deckelteil herstellbar ist.

Beispielsweise kann das Aufnahmeteil und/oder das Deckelteil mehrere Ausnehmungen aufweisen, die jeweils auf einem zu der Achse der zu verhindernden Drehung konzentrischen Kreis mit gleichem Radius liegen, so dass in einer bestimmten relativen Drehstellung von Aufnahmeteil und Deckelteil zueinander je eine Ausnehmung des Aufnahmeteils und des Deckelteils, insbesondere in axialer Richtung, miteinander fluchten, so dass das Verbindungselement zur Herstellung einer Formschlussverbindung in beide Ausnehmungen eingesteckt bzw. durch die Ausnehmungen hindurchgesteckt werden kann.

Wenn sowohl das Aufnahmeteil als auch das Deckelteil jeweils in mehreren Winkelpositionen mit dem Verbindungselement formschlüssig verbindbar ist, ergibt sich eine besonders große Anzahl bzw. ein besonders großer Bereich von verfügbaren Sollstellungen von Aufnahmeteil und Deckelteil, insbesondere wenn die jeweiligen Winkelpositionen, in denen das Verbindungselement zur Herstellung der mechanischen Verbindung zwischen Aufnahmeteil und Deckelteil jeweils mit diesen Teilen verbindbar ist, frei miteinander kombiniert werden können.

Gemäß einer weiteren Ausführungsform ist das Verbindungselement über eine Langlochverbindung in verschiedenen Winkelpositionen an dem Aufnahmeteil oder an dem Deckelteil fixierbar und mit dem jeweils anderen Teil formschlüssig verbindbar. Durch die Langlochverbindung lässt sich die Winkelposition zwischen dem Verbindungselement und dem jeweiligen Teil der Fassung vorzugsweise stufenlos einstellen, so dass die gegenseitige Position von Aufnahmeteil und Deckelteil besonders fein eingestellt werden kann.

Das Verbindungselement kann bei dieser Ausgestaltung eine ebene und flache Grundform besitzen und beispielsweise plättchen- oder scheibenförmig ausgestaltet sein. Die Langlochverbindung kann ein Langloch des Verbindungselements und ein sich durch das Langloch hindurch erstreckendes, mit dem jeweiligen Fassungsteil verbundenes stiftartiges Befestigungsmittel wie beispielsweise eine Schraube umfassen, über die das Verbindungselement an dem jeweiligen Fassungsteil, insbesondere durch Verklemmen, fixierbar ist. Das Langloch kann dabei im Wesentlichen in einer senkrecht zur Drehachse orientierten Ebene verlaufen, so dass die gewünschte Winkelposition einfach durch Verschieben des Verbindungselements entlang dieser Ebene einstellbar ist. Das Verbindungselement kann ein eine Formschlusskontur bzw. ein Formschlussmittel wie z.B. eine Ausnehmung oder einen Vorsprung umfassen, welches mit einer komplementären Formschlusskontur bzw. einem Formschlussmittel des jeweils anderen Fassungsteils eine in Richtung der zu verhindernden Drehung wirksame Formschlussverbindung bildet.

Gemäß einer weiteren Ausführungsform umfasst das Verbindungselement eine Schraube, über die das Aufnahmeteil und das Deckelteil in der Sollstellung miteinander verspannt sind. Eine solche Verspannung kann in mehreren, insbesondere stufenlos aufeinander folgenden Winkelpositionen herstellbar sein, um eine feine Einstellung der Sollstellung zu erlauben. Die Verspannung kann eine kraft- und insbesondere reibschlüssige Verbindung zwischen dem Aufnahmeteil und dem Deckelteil bewirken.

Die Schraube ist vorzugsweise mit dem Aufnahmeteil oder dem Deckelteil verschraubt und übt auf den jeweils anderen Teil eine Spannkraft aus, welche insbesondere eine kraftschlüssige mechanische Verbindung bewirkt. Vorzugsweise wird die Schraube durch die Verschraubung in ihrer Längsrichtung an dem jeweiligen Fassungsteil fixiert und kann somit eine in dieser Richtung wirksame Spannkraft auf den jeweils anderen Fassungsteil übertragen.

Die Spannkraft kann beispielsweise von einem Kopf der Schraube ausgeübt werden. Die Schraube kann sich durch ein Langloch des mit der Spannkraft beaufschlagten Lagerteils hindurch erstrecken, wodurch eine Kopplung der Schraube mit dem betroffenen Lagerteil in verschiedenen Winkelpositionen ermöglicht wird. Die Spannkraft kann dabei auf einen das Langloch begrenzenden Abschnitt des Lagerteils ausgeübt werden. Das über die Spannkraft fixierte Fassungsteil ist dabei vorzugsweise zwischen dem Schraubenkopf und dem anderen Fassungsteil eingeklemmt, wobei durch die Klemmwirkung ein in Richtung der zu verhindernden Drehung wirksamer Kraft- und insbesondere Reibschluss erzeugt wird.

Anstatt von einem Schraubkopf kann die Spannkraft auch von einem axialen Ende eines Schafts der Schraube ausgeübt werden. Die Schraube kann dabei an einem Fassungsteil angeschraubt und dadurch in Längsrichtung der Schraube fixiert sein und mit ihrem axialen Ende an einer quer zu der Längsrichtung der Schraube orientierten Fläche des anderen Fassungsteils unter einer Spannung und unter Bewirkung eines Reibschlusses anliegen. Die für den Aufbau der Spannung notwendige Gegenkraft kann durch die vorhandene verdrehbare Kopplung bzw. Verschraubung von Aufnahmeteil und Deckelteil bewirkt werden. Die Position der reibschlüssigen Verbindung kann dabei stufenlos wählbar sein, so dass eine beliebige Einstellung der relativen Drehstellung von Aufnahmeteil und Lagerteil ermöglicht wird.

Die mechanische Verbindung ist vorzugsweise dazu ausgebildet, ein Verdrehen von Aufnahmeteil und Deckelteil jeweils in beide Richtungen, d.h. sowohl in die positive als auch in die negative Drehrichtung zu verhindern.

Das Aufnahmeteil und das Deckelteil sind in der Sollstellung, vorzugsweise durch eine gegenseitige Verschraubung, drehbar miteinander gekoppelt, wobei die Sicherungseinrichtung eine Verdrehung des Aufnahmeteils und des Deckelteils und somit ein Lösen der Verschraubung bzw. eine Veränderung der eingestellten Verschraubungsstellung verhindert. Das eine Fassungsteil kann dazu ein Außengewinde und das andere Fassungsteil ein dazu komplementäres Innengewinde aufweisen. Über die Verschraubung kann ein Abstand des Aufnahmeteils und des Deckelteils entlang der Schraubachse eingestellt werden, welcher vorzugsweise eine Lagerfreistellung bestimmt. Die Sollstellung, in der die Fassung fixiert wird, entspricht dabei nicht notwendigerweise einer komplett ineinander geschraubten Stellung von Aufnahmeteil und Deckelteil, sondern kann insbesondere eine nur teilweise verschraubte Stellung darstellen.

Vorzugsweise ist die Sicherungseinrichtung in einem Bereich wirksam, der in radialer Richtung weiter von der Dreh- bzw. Schraubachse beabstandet ist als das die Verschraubung bildende Gewinde. Dadurch wird ein einfacher Aufbau der Fassung und ein langer Hebelarm von dem Wirkbereich der Sicherungseinrichtung zu der Schraubachse und folglich eine besonders wirksame und belastbare Verdrehsicherung erreicht. Beispielsweise kann die Sicherungseinrichtung im Bereich eines radial vorstehenden Kragens des Aufnahmeteils oder des Deckelteils wirksam sein. Der radiale Kragen kann dabei von einem Bereich des jeweiligen Fassungsteils abstehen, der im Rahmen der Verschraubung ganz oder teilweise in dem anderen Fassungsteil versenkt wird.

Vorzugsweise bestimmen das Aufnahmeteil und das Deckelteil in der Sollstellung eine Freistellung für das Drehlager. Wie vorstehend beschrieben, kann die Freistellung beispielsweise durch ein axiales Spiel des Lagers gebildet sein, welches durch den axialen Abstand des Aufnahmeteils von dem Deckelteil in der Sollstellung bestimmt wird. Ein solches Spiel kann im Bereich von wenigen Hundertsteln Millimetern liegen und beispielsweise etwa drei Hundertstel Millimeter betragen. Um eine Einstellung des Abstands in derart geringen Größenordnungen zu ermöglichen, kann die Verschraubung eine geringe Gewindesteigung aufweisen und können das Aufnahmeteil und das Deckelteil durch die mechanische Verbindung in einer Vielzahl von eng benachbarten Sollstellungen fixierbar sein.

Das von der Lagerfassung aufzunehmende Drehlager ist vorzugsweise als Wälzlager ausgebildet und für die Lagerung des Rotors einer Vakuumpumpe, insbesondere einer Turbomolekularpumpe, geeignet. Das Aufnahmeteil und das Deckelteil sind bevorzugt vollständig oder bereichsweise metallisch ausgebildet, insbesondere in dem Bereich, in dem die mechanische Verbindung wirksam ist. Das Verbindungselement kann ebenfalls vollständig oder bereichsweise metallisch ausgebildet sein.

Weiterer Gegenstand der Erfindung ist eine Lagerfassung für ein Drehlager, insbesondere einer Vakuumpumpe, wobei die Lagerfassung gemäß der vorliegenden Beschreibung ausgebildet ist. Die erfindungsgemäße Lagerfassung kann mit geringem Aufwand bereitgestellt werden und gewährleistet eine zuverlässige und sichere Aufnahme des Drehlagers. Gleichzeitig ermöglicht es die Lagerfassung, eine Freistellung des Drehlagers mit hoher Genauigkeit einzustellen, so dass die Laufeigenschaften insbesondere einer Vakuumpumpe optimiert werden können.

Weiterer Gegenstand der Erfindung ist ein Verfahren mit den Merkmalen des Anspruchs 15.

Die mechanische Verbindung verhindert eine Verdrehung des Aufnahmeteils und des Deckelteils und sichert somit das Aufnahmeteil und das Deckelteil in der gewünschten Sollstellung, ohne dass eine Verklebung notwendig wäre, welche ein vorherige aufwendige Reinigung der Fassungsteile oder eine darauf folgende zeitaufwendige Trocknung erfordert.

Das Verfahren kann insbesondere mit einer wie hierin beschriebenen erfindungsgemäßen Lagerfassung durchgeführt werden, wobei die mechanische Verbindung unter Verwendung der Sicherungseinrichtung der Lagerfassung hergestellt werden kann. Die vorstehend in Bezug auf die erfindungsgemäße Lagerfassung und deren Verwendung beschriebenen Vorbeile und vorteilhaften Ausführungsformen stellen bei entsprechender Anwendung Vorteile und vorteilhafte Ausführungsformen des erfindungsgemäßen Verfahrens dar.

Insbesondere ermöglicht es die Verwendung einer geeigneten Lagerfassung, eine von mehreren vordefinierten Sollstellungen auszuwählen und das Aufnahmeteil und das Deckelteil in der vorgegebenen Sollstellung zu fixieren. Die mechanische Verbindung kann im Rahmen des Verfahrens mehrfach gelöst und wieder hergestellt werden, beispielsweise im Rahmen einer Nachjustierung bzw. Feineinstellung einer durch die relative Positionierung von Aufnahmeteil und Deckelteil einstellbaren Lagerfreistellung. Das Aufnahmeteil und das Lagerteil können auch zunächst für den Transport oder die Aufbewahrung der Lagerfassung in einer Nicht-Sollstellung durch Herstellung der mechanischen Verbindung gesichert werden, wobei die mechanische Verbindung später gelöst und in einer für den Betrieb gewünschten Sollstellung von Aufnahmeteil und Deckelteil wieder hergestellt wird, um die Lagerfassung betriebsfertig zu machen.

Nachfolgend wird die vorliegende Erfindung beispielhaft anhand vorteilhafter Ausführungsformen unter Bezugnahme auf die beigefügten Figuren beschrieben. Es zeigen:
- Fig. 1: eine Vakuumpumpe gemäß einer Ausführungsform der Erfindung im Axialschnitt,
- Fig. 2: eine Lagerfassung gemäß einer Ausführungsform der Erfindung im Axialschnitt,
- Fig. 3: die Lagerfassung von Fig. 2 in axialer Richtung von unten betrachtet,
- Fig. 4: eine Lagerfassung gemäß einer weiteren Ausführungsform im Axialschnitt,
- Fig. 5: die Lagerfassung von Fig. 4 in axialer Richtung von unten betrachtet,
- Fig. 6: eine Lagerfassung gemäß einer weiteren Ausführungsform im Axialschnitt, und
- Fig. 7: die Lagerfassung von Fig. 6 in axialer Richtung von unten betrachtet.

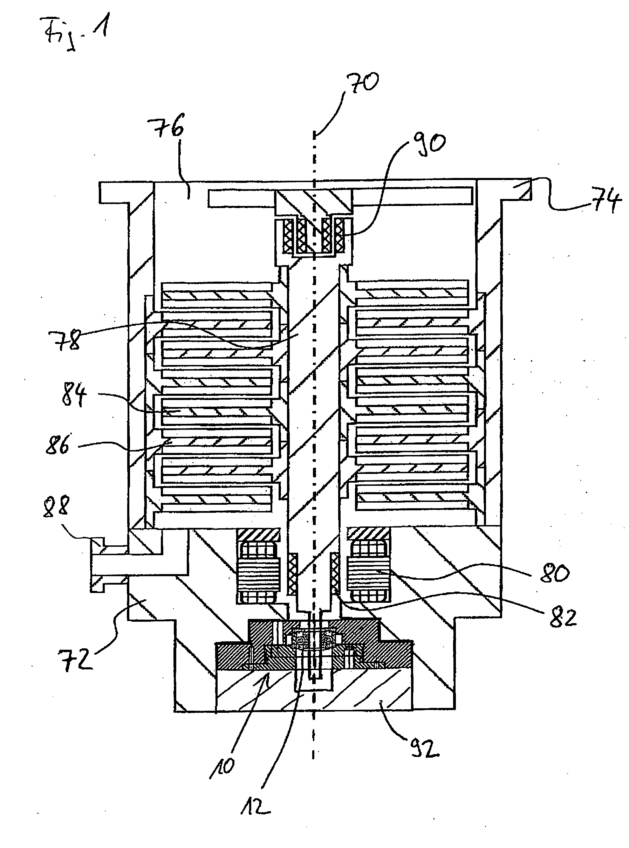

Fig. 1 zeigt eine als Turbomolekularpumpe ausgebildete Vakuumpumpe in einer parallel zu der Drehachse 70 der Vakuumpumpe geschnittenen Darstellung.

Das mehrteilige Gehäuse 72 der Vakuumpumpe umfasst an seiner Hochvakuumseite einen Flansch 74, mit dem die Vakuumpumpe an ein zu evakuierendes Volumen anschließbar ist. Der Flansch 74 umgibt die Ansaugöffnung 76, durch welche die Vakuumpumpe Gas ansaugt.

Die Vakuumpumpe umfasst einen Rotor mit einer um die Achse 70 drehbar gelagerten Rotorwelle 78, welche durch einen elektromotorischen Antrieb drehend antreibbar ist, welcher eine statorseitige Antriebsspule 80 und einen rotorseitigen Antriebsmagneten 82 umfasst.

Die Rotorwelle 78 trägt mehrere in radialer Richtung orientierte und mit Schaufeln versehene Rotorscheiben 84, die zwischen an dem Gehäuse 72 festgelegten und ebenfalls mit Schaufeln versehenen Statorscheiben 86 angeordnet sind. Die Rotor- und Statorscheiben 84, 86 bilden einen turbomolekularen Pumpenmechanismus, dessen Pumpwirkung das durch die Ansaugöffnung 76 angesaugte Gas zu einem Pumpenauslass 88 fördert. In Strömungsrichtung zwischen der Turbomolekularpumpstufe und dem Auslass 88 könnten prinzipiell noch weitere insbesondere molekulare Pumpstufen, wie beispielsweise eine oder mehrere Hohlwegpumpstufen, Siegbahnpumpstufen oder Seitenkanalpumpstufen, vorgesehen sein, um ein gewünschtes Leistungsverhalten der Pumpe zu gewährleisten.

Die Rotorwelle 78 ist sowohl im Bereich der Hochvakuumseite als auch auf der gegenüberliegenden Vorvakuumseite der Pumpe jeweils drehbar gelagert. Auf der Hochvakuumseite ist ein Permanentmagnetlager 90 vorgesehen, welches schmiermittelfrei ausgebildet ist, so dass eine Verschmutzung des durch die Ansaugöffnung 76 angesaugten Gases vermieden wird.

An der Vorvakuumseite ist ein als Wälzlager ausgebildetes Drehlager 12 vorgesehen. Das Drehlager 12 ist als geschmiertes Lager ausgebildet und kann beispielsweise fettgeschmiert oder durch eine in Fig. 1 nicht dargestellte Umlaufschmierung mit Schmiermittel versorgt sein.

Das Drehlager 12 ist in einer Lagerfassung 10 aufgenommen, welche in das Gehäuse 72 eingepasst und mit dem Gehäuse 72 verbunden ist. Der die Lagerfassung 10 aufnehmende Bereich innerhalb des Gehäuses 72 ist durch eine abnehmbare Kappe 92 verschlossen, so dass die Lagerfassung 10 durch Abnehmen der Kappe 92 von außen zugänglich ist.

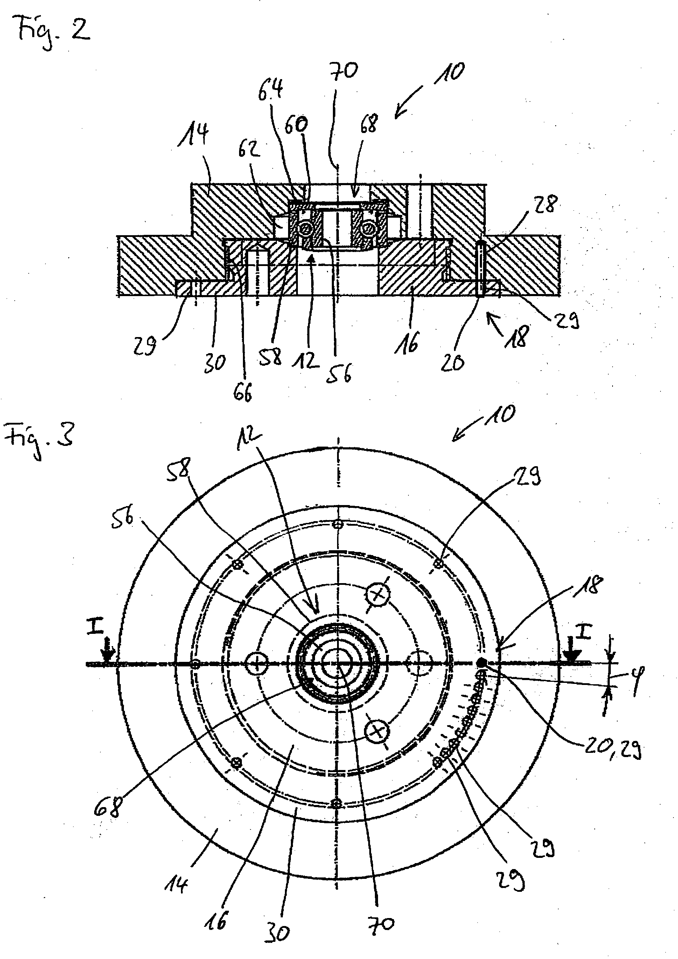

Mögliche Ausgestaltungen der Lagerfassung 10 und des darin aufgenommenen Drehlagers 12 sind nachfolgend in Bezug auf Fig. 2 bis 7 erläutert.

Fig. 2 zeigt eine Lagerfassung 10 gemäß einer Ausführungsform der Erfindung im Axialschnitt.

Die Fassung 10 umfasst ein Aufnahmeteil 14 und ein Deckelteil 16, die in Fig. 2 in ihrer gegenseitigen Sollstellung dargestellt sind. In dieser Sollstellung bilden das Aufnahmeteil 14 und das Deckelteil 16 einen Aufnahmeraum, in dem das Drehlager 12 aufgenommen und festgelegt ist.

Das Drehlager 12 umfasst einen Innenring 56 und einen Außenring 58, zwischen denen die kugelförmigen Wälzelemente angeordnet sind. An einem oberen Ende des Drehlagers 12, welches in dem in Fig. 1 gezeigten eingebauten Zustand der Fassung 10 den Pumpstufen der Pumpe zugewandt ist, ist ein Dichtelement 60 vorgesehen. Das Dichtelement 60 steht ausgehend von dem Außenring 58 in radialer Richtung nach innen vor und bildet gemeinsam mit dem Innenring 56 eine dynamische Dichtung, die ein Austreten von Schmier- oder Betriebsmittel aus dem durch das Dichtelement 60 abgedeckten Zwischenraum zwischen dem Innenring 56 und dem Außenring 58 zu den Pumpstufen hin verhindert.

Der Außenring 58 des Drehlagers 12 ist in dem Aufnahmeraum, der durch das in der Sollstellung befindliche Aufnahmeteil 14 und Deckelteil 16 gebildet ist, sowohl in axialer als auch in radialer Richtung festgelegt. Das Aufnahmeteil 14 und das Deckelteil 16 stützen den Außenring 58 dabei jeweils in entgegen gesetzten axialen Richtungen ab und stützen den Außenring gemeinsam in radialer Richtung ab. Zwischen dem Außenring 58 und dem Aufnahmeteil 14 ist in radialer und axialer Richtung jeweils ein ringförmiges Dämpfungselement 62, 64 angeordnet, welches zur schwingfähigen Halterung des Lagers 12 in der Fassung und zum Dämpfen der auftretenden Schwingungen ausgebildet ist.

Die Lagerfassung 10 weist eine in axialer Richtung durchgehende Öffnung 68 auf, über die das Lager 12 zur Kopplung mit einer Rotorwelle 78 (Fig. 1) zugänglich ist. Prinzipiell könnte die Fassung auch nur einseitig ausgebildet sein, wobei allerdings eine wie in Fig. 2 gezeigte Ausgestaltung mit einer sich durch das Aufnahmeteil 14 und das Deckelteil 16 hindurch erstreckenden axialen Öffnung 68 bevorzugt ist.

Das Deckelteil 16 ist zur gegenseitigen Fixierung in das Aufnahmeteil 14 hineingeschraubt. Die Verschraubung ist durch ein Innengewinde 66 des Aufnahmeteils 14 und ein Außengewinde des Decketeils 16 gebildet, wobei die Gewinde in radialer Richtung von der Öffnung 68 beabstandet sind. Das Aufnahmeteil 14 und das Deckelteil 16 sind über die Verschraubung drehbar miteinander gekoppelt, wobei die Schraub- bzw. Drehachse der Verschraubung im vorliegenden Beispiel mit der Rotationsachse 70 des Drehlagers 12 zusammenfällt. Die Verschraubung gewährleistet nicht nur die Fixierung von Aufnahmeteil 14 und Deckelteil 16 in axialer Richtung, sondern erlaubt außerdem das Einstellen einer axialen Ausdehnung des Aufnahmeraums für das Drehlager 12, indem das Deckelteil 16 mehr oder weniger weit in das Aufnahmeteil 14 eingeschraubt und der Abstand zwischen Aufnahmeteil 14 und Deckelteil 16 dadurch variiert wird. Dadurch kann die Freistellung bzw. das axiale Spiel des Lagers 12 präzise eingestellt werden, um gewünschte Lagereigenschaften und Laufeigenschaften der Pumpe zu gewährleisten. Ferner kann die Fassung 10 an unterschiedlich hohe Drehlager 12 angepasst werden.

Zur Fixierung des Aufnahmeteils 14 und des Deckelteils 16 in der in Fig. 2 dargestellten Sollstellung weist die Fassung 10 eine Sicherungseinrichtung 18 auf, welche eine gegenseitige Verdrehung des Aufnahmeteils 14 und des Deckelteils 16 gegenüber der Sollstellung verhindert. Die Sicherungseinrichtung 18 umfasst ein stiftartiges Verbindungselement 20, welches sich durch eine Ausnehmung 29 der Deckelteils hindurch erstrecke, die im Bereich eines radial abstehenden Kragens 30 des Deckelteils 16 ausgebildet ist, und sich gleichzeitig in eine damit fluchtende Ausnehmung 28 des Aufnahmeteils 14 hinein erstreckt.

Das in die Ausnehmungen 28, 29 eingeführte Verbindungselement 20 bildet mit beiden Teilen 14, 16 eine in Drehrichtung um die Achse 70 wirksame Formschlussverbindung und sichert somit die Teile 14, 16 gegen Verdrehen, so dass die Fassung 10 in der gewünschten Sollstellung fixiert ist. Die durch das Verbindungselement 20 bewirkte Formschlussverbindung zwischen den Teilen 14, 16 erfordert lediglich das Einführen des Stifts 20 in die Ausnehmung 28, 29 und ist danach sofort wirksam. Die mechanische Verbindung lässt sich jederzeit durch Entnahme oder Einführen des Stifts 20 wieder lösen bzw. erneut herstellen. Um ein unbeabsichtigtes Lösen der mechanischen Verbindung zu verhindern, kann der Stift 20 ein Übermaß gegenüber einer Ausnehmung 28, 29 aufweisen, so dass er durch eine Klemmwirkung in der jeweiligen Ausnehmung 28, 29 gehalten wird.

Wie in Fig. 2 gezeigt, umfasst das Deckelteil 16 mehrere Ausnehmungen 29, die in verschiedenen Winkelpositionen relativ zur Achse 70 angeordnet sind, so dass das Verbindungselement 20 in verschiedenen Winkelpositionen mit dem Deckelteil 16 koppelbar ist. Die mechanische Verbindung ist somit in verschiedenen Sollstellungen der Fassung 10 herstellbar, nämlich in jeder Stellung, in der eine der Ausnehmungen 29 des Deckelteils 16 mit einer Ausnehmung 28 des Aufnahmeteils 14 fluchtet. Mit der Sicherungseinrichtung 18 ist somit eine der Anzahl von Ausnehmungen 28, 29 entsprechende Anzahl von Sollstellungen erreichbar.

Fig. 3 zeigt die Lagerfassung 10 in axialer Richtung von unten gesehen. Die der Darstellung von Fig. 2 entsprechende Schnittebene ist in Fig. 3 durch die Linie I-I dargestellt. Wie in Fig. 3 gezeigt, weist der radiale Kragen 30 des Deckelteils 16 über seinen Umfang verteilt eine Vielzahl von Ausnehmungen 29 auf, die jeweils eine diskrete Winkelposition definieren, in der das Verbindungselement 20 mit dem Deckelteil 16 verbindbar ist. Die Ausnehmungen 29 sind auf einer zu der Achse 70 konzentrischen Kreislinie angeordnet, so dass jede Ausnehmung 29 des Deckelteils 16 in einer bestimmten Drehstellung mit einer darunter angeordneten Ausnehmung 28 des Aufnahmeteils 14 fluchtet, um die Herstellung der mechanischen Verbindung zu ermöglichen. Wie in Fig. 3 gezeigt, sind die benachbarten Ausnehmungen 29 in einem Winkelabstand ϕ von etwa 5° zueinander angeordnet, wodurch eine feine Abstufung der verfügbaren Sollstellungen gewährleistet ist. Um die Anzahl der Sollstellungen noch weiter zu erhöhen, kann auch das Aufnahmeteil 14 mehrere Ausnehmungen 28 aufweisen, die bevorzugt ebenfalls auf einer zu der Achse 70 konzentrischen Kreislinie verteilt angeordnet sind.

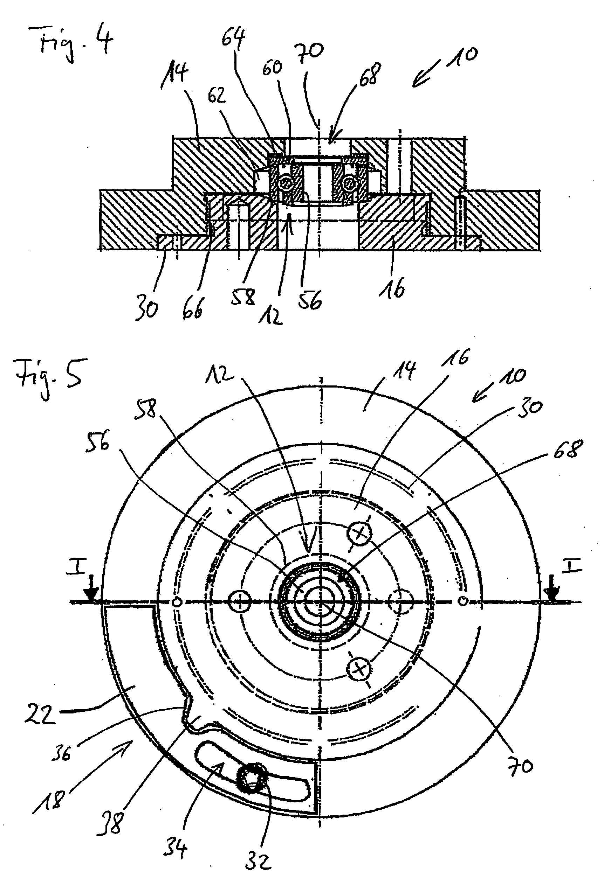

Fig.4 und 5 zeigen eine Lagerfassung 10 gemäß einer weiteren Ausführungsform der Erfindung. Mit Ausnahme der abweichenden Ausgestaltung der Sicherungseinrichtung entspricht die in Fig. 4 und 5 gezeigte Lagerfassung der in Fig. 2 und 3 gezeigten Lagerfassung.

Die Sicherungseinrichtung 18 der Lagerfassung 10 von Fig. 4 und 5 ist in Fig. 5 gezeigt. Sie umfasst ein flaches ebenes Verbindungselement 22, welches mit einer seiner flachen Seiten einer ebenen Ringfläche des Aufnahmeteils 14 aufliegt und kreisbogenförmig ausgebildet ist.

Das Verbindungselement 22 weist ein Langloch 34 auf, durch das sich eine mit dem Aufnahmeteil 14 verschraubte Schraube 32 hindurch erstreckt. Der Kopf der Schraube 32 klemmt dabei das Verbindungselement 22 an dem Aufnahmeteil 14 fest, sodass das Verbindungselement 22 in der gezeigten Winkelposition reibschlüssig an dem Aufnahmeteil 14 fixiert ist.

Das Verbindungselement 22 umfasst eine radial einspringende Ausnehmung 36, in der ein von dem Kragen 30 des Deckelteils 16 radial abstehender Vorsprung 38 des Deckelteils 16 aufgenommen ist. Die Ausnehmung 36 und der Vorsprung 38 bilden ineinander greifende Formschlusskonturen mit einer in Drehrichtung um die Achse 70 wirksamen Hinterschneidung, welche gemeinsam mit der reibschlüssigen Verbindung zwischen dem Verbindungselement 22 und dem Aufnahmeteil 14 eine Verdrehung des Aufnahmeteils 14 und des Deckelteils 16 verhindert.

Durch Lösen der Schraube 32 und Verschieben des Verbindungselements 22 entlang des Langlochs 34 kann die Winkelposition des Verbindungselements 22 relativ zu dem Aufnahmeteil 14 und dadurch die Sollstellung, in der das Aufnahmeteil 14 und das Deckelteil 16 fixierbar sind, stufenlos eingestellt werden.

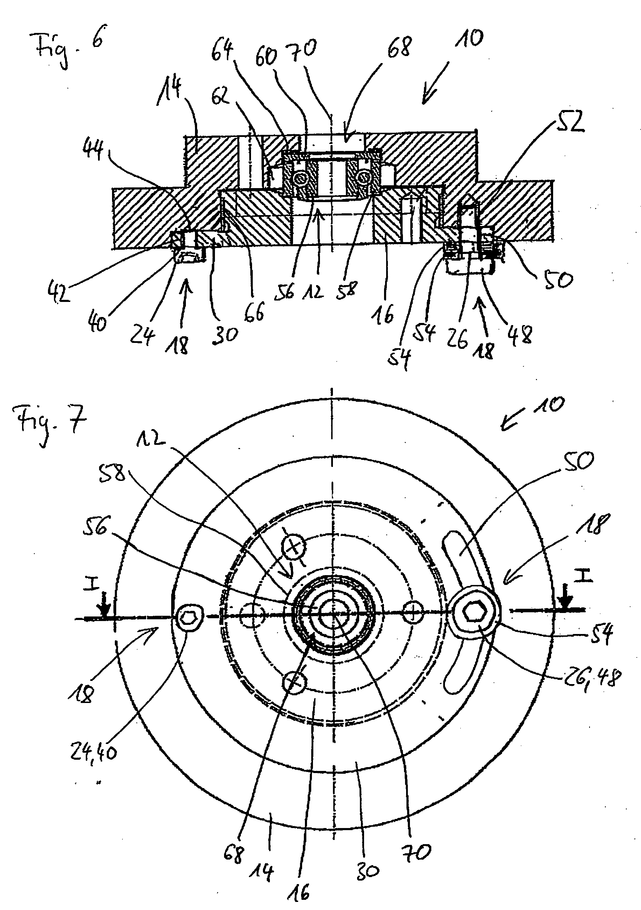

Fig. 6 und 7 zeigen eine Lagerfassung 10 gemäß einer weiteren Ausführungsform der Erfindung, welche abgesehen von der abweichenden Ausgestaltung der Sicherungseinrichtung 18 der in Fig. 2 bis 5 gezeigten Lagerfassung 10 entspricht.

Die Lagerfassung 10 von Fig. 6 und 7 umfasst zwei Sicherungseinrichtungen 18, welche jeweils prinzipiell auch als einzige Sicherungseinrichtung einer Lagerfassung 10 Verwendung finden können.

Die in Fig. 6 und 7 links dargestellte Sicherungseinrichtung 18 umfasst ein als Schraube ausgebildetes Verbindungselement 24 mit einem Schraubkopf 40. Die Schraube 24 ist in ein Schraubloch 42 des Kragens 30 des Deckelteils 16 eingeschraubt und durch diese Verschraubung in axialer Richtung an dem Deckelteil 16 fixiert. Eine Stirnseite 44 der Schraube 24 liegt an einer Oberfläche des Aufnahmeteils 14 an. Da das Aufnahmeteil 14 über die Verschraubung 66 in axialer Richtung an dem Deckelteil 16 fixiert ist, wird durch Eindrehen der Schraube eine Verspannung der Stirnseite 44 der Schraube mit der Oberfläche des Aufnahmeteils 14 bewirkt, welche zu einer reibschlüssigen mechanischen Verbindung zwischen dem Aufnahmeteil 14 und dem Deckelteils 16 führt, die eine Verdrehung von Aufnahmeteil 14 und Deckelteil 16 verhindert.

Die mechanische Verbindung kann durch Lösen der Schraube 24 aufgehoben und in einer beliebigen relativen Drehstellung von Aufnahmeteil 14 und Deckelteil 16 wieder hergestellt werden, sodass eine stufenlose Einstellung dieser Drehstellung möglich ist.

Die in Fig. 6 und 7 rechts dargestellte Sicherungseinrichtung 18 umfasst ein ebenfalls als Schraube ausgebildetes Verbindungselement 26. Die Schraube 26 durchgreift ein Langloch 50 des Deckelteils 16 und ist an ihrem axialen Ende in einem Schraubloch 52 des Aufnahmeteils 14 verschraubt und dadurch in axialer Richtung fixiert. Zwischen dem Schraubkopf 48 und dem Deckelteil 16 sind zwei von der Schraube 26 durchgriffene Spannringe 54 eingelegt, die beispielsweise ein elastomeres Material aufweisen können.

Wird die Schraube 26 festgezogen, wird von dem Schraubkopf 48 eine Spannkraft auf die Spannringe 54 und das Deckelteil 16 ausgeübt, so dass das Deckelteil 16 zwischen den Spannringen 54 und dem Aufnahmeteil 14 eingeklemmt wird. Die Spannringe 54 dienen dazu, eine definierte Klemmwirkung zu erzielen. Ein zwischen den Spannringen 54 und dem Deckelteil 16 bzw. zwischen dem Deckelteil 16 und dem Aufnahmeteil 14 infolge der Klemmwirkung eintretender Reibschluss sichert das Aufnahmeteil 14 und das Deckelteil 16 gegen ein Verdrehen um die Achse 70.

Durch Lösen der Schraube 26 lässt sich die kraftschlüssige Verbindung zwischen dem Aufnahmeteil 14 und dem Deckelteil 16 lösen, so dass das Deckelteil 16 gegenüber dem Aufnahmeteil 14 verdreht werden kann. Wie in Fig. 7 gezeigt, ist das Langloch 50 kreisbogenförmig und konzentrisch zu der Achse 70 ausgebildet und erlaubt eine Kopplung von Aufnahmeteil 14 und Deckelteil 16 in einer beliebigen Drehstellung innerhalb des von dem Langloch 50 abgedeckten Winkelbereichs.

### Bezugszeichenliste

- 10: Lagerfassung
- 12: Drehlager
- 14: Aufnahmeteil
- 16: Deckelteil
- 18: Sicherungseinrichtung
- 20, 22, 24, 26: Verbindungselement
- 28, 29: Ausnehmung
- 30: Kragen
- 32: Schraube
- 34: Langloch
- 36: Ausnehmung
- 38: Vorsprung
- 40: Schraubkopf
- 42: Schraubloch
- 44: Stirnseite
- 48: Schraubkopf
- 50: Langloch
- 52: Schraubloch
- 54: Spannring
- 56: Innenring
- 58: Außenring
- 60: Dichtelement
- 62, 64: Dämpfungselement
- 66: Gewinde
- 68: Öffnung
- 70: Achse
- 72: Gehäuse
- 74: Flansch
- 76: Ansaugöffnung
- 78: Rotorwelle
- 80: Antriebsspule
- 82: Antriebsmagnet
- 84: Rotorscheibe
- 86: Statorscheibe
- 88: Pumpenauslass
- 90: Permanentmagnetlager
- 92: Kappe
- ϕ: Winkelabstand

## Patentansprüche

1. Vakuumpumpe, insbesondere Turbomolekularpumpe, mit einer Lagerfassung (10) für ein insbesondere als Wälzlager ausgebildetes Drehlager (12), in dem ein Rotorwelle (78) eines Rotors der Pumpe um eine Achse (70) drehbar gelagert ist, wobei die Lagerfassung (10) ein Aufnahmeteil (14) und ein Deckelteil (16) umfasst, die, insbesondere durch Verschrauben, gegeneinander verdrehbar sind und zumindest in einer Sollstellung gemeinsam einen Aufnahmeraum für das Drehlager (12) begrenzen,
wobei eine Sicherungseinrichtung (18) zur Herstellung einer mechanischen Verbindung zwischen dem Aufnahmeteil (14) und dem Deckelteil (16) vorgesehen ist, welche eine gegenseitige Verdrehung des Aufnahmeteils (14) und des Deckelteils (16) in der Sollstellung verhindert,
**dadurch gekennzeichnet, dass**
die Sicherungseinrichtung (18) zumindest ein Verbindungselement (20, 22, 24, 26) umfasst, welches gleichzeitig sowohl mit dem Aufnahmeteil (14) als auch mit dem Deckelteil (16) verbindbar ist.

2. Vakuumpumpe nach Anspruch 1,
**dadurch gekennzeichnet, dass**
die mechanische Verbindung in verschiedenen Sollstellungen des Aufnahmeteils (14) und des Deckelteils (16) herstellbar ist.

3. Vakuumpumpe nach Anspruch 1 oder 2,
**dadurch gekennzeichnet, dass**
die mechanische Verbindung lösbar ist, insbesondere wobei die mechanische Verbindung wiederholt herstellbar und wieder lösbar ist.

4. Vakuumpumpe nach einem der vorstehenden Ansprüche,
**dadurch gekennzeichnet, dass**
die mechanische Verbindung eine formschlüssige oder eine kraftschlüssige Verbindung ist.

5. Vakuumpumpe nach einem der vorstehenden Ansprüche,
**dadurch gekennzeichnet, dass**
das Verbindungselement (20, 22, 24, 26) zur Herstellung einer Form- oder Kraftschlussverbindung zwischen dem Aufnahmeteil (14) und dem Deckelteil (16) ausgebildet ist.

6. Vakuumpumpe nach Anspruch 5,
**dadurch gekennzeichnet, dass**
das Verbindungselement (20, 22, 24, 26) dazu ausgebildet ist, mit dem Aufnahmeteil (14) und/oder mit dem Deckelteil (16) eine Formschlussverbindung zu bilden.

7. Vakuumpumpe nach Anspruch 5 oder 6,
**dadurch gekennzeichnet, dass**
das Verbindungselement (20, 22, 24, 26) mit dem Aufnahmeteil (14) und/oder mit dem Deckelteil (16) in verschiedenen Winkelpositionen verbindbar ist.

8. Vakuumpumpe nach einem der Ansprüche 5 bis 7,
**dadurch gekennzeichnet, dass**
das insbesondere stiftartige Verbindungselement (20, 22, 24, 26) dazu ausgebildet ist, sowohl mit dem Aufnahmeteil (14) als auch mit dem Deckelteil (16) eine Formschlussverbindung zu bilden, wobei das Aufnahmeteil (14) und/oder das Deckelteil (16) eine oder mehrere in verschiedenen Winkelpositionen angeordnete Ausnehmungen (28, 29) für das Verbindungselement (20, 22, 24, 26) aufweist.

9. Vakuumpumpe nach einem der Ansprüche 5 bis 8,
**dadurch gekennzeichnet, dass**
das Verbindungselement (20, 22, 24, 26) über eine Langlochverbindung in verschiedenen Winkelpositionen an dem Aufnahmeteil (14) oder an dem Deckelteil (16) fixierbar und mit dem jeweils anderen Teil (16, 14) formschlüssig verbindbar ist.

10. Vakuumpumpe nach einem der Ansprüche 5 bis 9,
**dadurch gekennzeichnet, dass**
das Verbindungselement (20, 22, 24, 26) eine Schraube umfasst, über die das Aufnahmeteil (14) und das Deckelteil (16) in der Sollstellung miteinander verspannt sind.

11. Vakuumpumpe nach einem der vorstehenden Ansprüche,
**dadurch gekennzeichnet, dass**
die Sicherungseinrichtung (18) im Bereich eines radial vorstehenden Kragens (30) des Aufnahmeteils (14) oder des Deckelteils (16) wirksam ist.

12. Vakuumpumpe nach einem der vorstehenden Ansprüche,
**dadurch gekennzeichnet, dass**
das Aufnahmeteil (14) und das Deckelteil (16) in der Sollstellung eine Freistellung für das Drehlager (12) bestimmen.

13. Lagerfassung (10) für ein Drehlager, insbesondere einer Vakuumpumpe nach einem der vorstehenden Ansprüche, mit einem Aufnahmeteil (14) und einem Deckelteil (16), die, insbesondere durch Verschrauben, gegeneinander verdrehbar sind und zumindest in einer Sollstellung gemeinsam einen Aufnahmeraum für das Drehlager (12) begrenzen,
wobei eine Sicherungseinrichtung (18) zur Herstellung einer mechanischen Verbindung zwischen dem Aufnahmeteil (14) und dem Deckelteil (16) vorgesehen ist, welche eine gegenseitige Verdrehung des Aufnahmeteils (14) und des Deckelteils (16) in der Sollstellung verhindert,
**dadurch gekennzeichnet, dass**
die Sicherungseinrichtung (18) zumindest ein Verbindungselement (20, 22, 24, 26) umfasst, welches gleichzeitig sowohl mit dem Aufnahmeteil (14) als auch mit dem Deckelteil (16) verbindbar ist.

14. Lagerfassung (10) nach Anspruch 13,
**gekennzeichnet durch** die kennzeichnenden Merkmale eines der Ansprüche 2 bis 12.

15. Verfahren zum Einstellen einer Lagerfassung (10) für ein Drehlager (12), insbesondere einer Vakuumpumpe mit den Merkmalen eines der Ansprüche 1 bis 12, wobei die Lagerfassung (10) ein Aufnahmeteil (14) und ein Deckelteil (16) umfasst, die, insbesondere durch Verschrauben, gegeneinander verdrehbar sind und zumindest in einer Sollstellung gemeinsam einen Aufnahmeraum für das Drehlager (12) begrenzen,
wobei das Aufnahmeteil (14) und das Deckelteil (16) gegeneinander verdreht und dadurch in die Sollstellung gebracht werden, und dass anschließend in der Solistellung eine mechanische Verbindung zwischen dem Aufnahmeteil (14) und dem Deckelteil (16) hergestellt wird, welche eine gegenseitige Verdrehung des Aufnahmeteils (14) und des Deckelteils (16) verhindert,
**dadurch gekennzeichnet, dass**
die mechanische Verbindung durch zumindest ein Verbindungselement (20, 22, 24, 26) hergestellt wird, welches gleichzeitig sowohl mit dem Aufnahmeteil (14) als auch mit dem Deckelteil (16) verbunden wird.-.-.-.

## Claims

1. A vacuum pump, in particular a turbomolecular pump, comprising a bearing mount (10) for a rotary bearing (12), which is in particular configured as a roller element bearing, in which a rotor shaft (78) of a rotor of the pump is rotatably supported about an axis (70), wherein the bearing mount (10) comprises a reception part (14) and a cover part (16) which are rotatable with respect to one another, in particular by screwing, and which together bound a reception space for the rotary bearing (12) at least in one desired position,
wherein a securing device (18) is provided for establishing a mechanical connection between the reception part (14) and the cover part (16), said securing device (18) preventing a reciprocal rotation of the reception part (14) and of the cover part (16) in the desired position,
**characterized in that**
the securing device (18) comprises at least one connection element (20, 22, 24, 26) which can be simultaneously connected both to the reception part (14) and to the cover part (16).

2. A vacuum pump in accordance with claim 1,
**characterized in that**
the mechanical connection can be established in different desired positions of the reception part (14) and of the cover part (16).

3. A vacuum pump in accordance with claim 1 or claim 2,
**characterized in that**
the mechanical connection is releasable, in particular with the mechanical connection being able to be repeatedly established and released again.

4. A vacuum pump in accordance with any one of the preceding claims,
**characterized in that**
the mechanical connection is a form-fitted connection or a force-transmitting connection.

5. A vacuum pump in accordance with any one of the preceding claims,
**characterized in that**
the connection element (20, 22, 24, 26) is configured for establishing a form-fitted connection or a force-transmitting connection between the reception part (14) and the cover part (16).

6. A vacuum pump in accordance with claim 5,
**characterized in that**
the connection element (20, 22, 24, 26) is configured to form a form-fitted connection with the reception part (14) and/or with the cover part (16).

7. A vacuum pump in accordance with claim 5 or claim 6,
**characterized in that**
the connection element (20, 22, 24, 26) is connectable to the reception part (14) and/or to the cover part (16) at different angular positions.

8. A vacuum pump in accordance with any one of the claims 5 to 7,
**characterized in that**
the connection element (20, 22, 24, 26), which is in particular of a pin type, is configured to form a form-fitted connection both with the reception part (14) and with the cover part (16), with the reception part (14) and/or the cover part (16) having one or more recesses (28, 29) for the connection element (20, 22, 24, 26) arranged at different angular positions.

9. A vacuum pump in accordance with any one of the claims 5 to 8,
**characterized in that**
the connection element (20, 22, 24, 26) is fixable at different angular positions via an elongate hole connection to the reception part (14) or to the cover part (16) and is connectable to the respective other part (16, 14) in a form-fitted manner.

10. A vacuum pump in accordance with any one of the claims 5 to 9,
**characterized in that**
the connection element (20, 22, 24, 26) comprises a screw via which the reception part (14) and the cover part (16) are interlocked with one another in the desired position.

11. A vacuum pump in accordance with any one of the preceding claims,
**characterized in that**
the securing device (18) is effective in the region of a radially projecting collar (30) of the reception part (14) or of the cover part (16).

12. A vacuum pump in accordance with any one of the preceding claims,
**characterized in that**
the reception part (14) and the cover part (16) determine a release position for the rotary bearing (12) in the desired position.

13. A bearing mount (10) for a rotary bearing, in particular of a vacuum pump in accordance with any one of the preceding claims, comprising a reception part (14) and a cover part (16) which are rotatable with respect to one another, in particular by screwing, and which together bound a reception space for the rotary bearing (12) at least in one desired position;
wherein a securing device (18) for establishing a mechanical connection between the reception part (14) and the cover part (16) is provided, said securing device (18) preventing a reciprocal rotation of the reception part (14) and of the cover part (16) in the desired position,
**characterized in that**
the securing device (18) comprises at least one connection element (20, 22, 24, 26) which can be simultaneously connected both to the reception part (14) and to the cover part (16).

14. A bearing mount (10) in accordance with claim 13,
**characterized by** the characterizing features of any one of the claims 2 to 12.

15. A method of setting a bearing mount (10) for a rotary bearing (12), in particular of a vacuum pump having the features of any one of the claims 1 to 12, wherein the bearing mount (10) comprises a reception part (14) and a cover part (16) which can be rotated with respect to one another, in particular by screwing, and which together bound a reception space for the rotary bearing (12) at least in one desired position,
wherein the reception part (14) and the cover part (16) are rotated with respect to one another and are thereby brought into the desired position; and wherein subsequently a mechanical connection is established between the reception part (14) and the cover part (16) in the desired position, said mechanical connection preventing a reciprocal rotation of the reception part (14) and of the cover part (16),
**characterized in that**
the mechanical connection is established by at least one connection element (20, 22, 24, 26) which can be simultaneously connected both to the reception part (14) and to the cover part (16).

## Revendications

1. Pompe à vide, en particulier pompe turbo moléculaire, comprenant une monture-palier (10) pour un palier rotatif (12) réalisé en particulier sous forme de palier à roulement, dans lequel un arbre de rotor (78) d'un rotor de la pompe est monté en rotation autour d'un axe (70), dans laquelle la monture-palier (10) inclut une partie de réception (14) et une partie formant couvercle (16) qui sont capables de tournées l'une par rapport à l'autre, en particulier par vissage et, au moins dans une position de consigne, délimite conjointement une chambre de réception pour le palier rotatif (12),
dans laquelle il est prévu un moyen de sécurisation (18) pour établir une liaison mécanique entre la partie de réception (14) et la partie formant couvercle (16), qui empêche une rotation réciproque de la partie de réception (14) et de la partie formant couvercle (16) dans la position de consigne,
**caractérisée en ce que**
le moyen de sécurisation (18) inclut au moins un élément de liaison (20, 22, 24, 26) qui est susceptible d'être relié simultanément aussi bien à la partie de réception (14) qu'a la partie formant couvercle (16).

2. Pompe à vide selon la revendication 1,
**caractérisée en ce que** la liaison mécanique est susceptible d'être établie dans différentes positions de consigne de la partie de réception (14) et de la partie formant couvercle (16).

3. Pompe à vide selon la revendication 1 ou 2,
**caractérisée en ce que** la liaison mécanique est détachable, et en particulier dans laquelle la liaison mécanique est susceptible d'être établie et à nouveau détachée de façon répétée.

4. Pompe à vide selon l'une des revendications précédentes,
**caractérisée en ce que** la liaison mécanique est une liaison à coopération de formes ou une liaison à coopération de forces.

5. Pompe à vide selon l'une des revendications précédentes,
**caractérisée en ce que** l'élément de liaison (20, 22, 24, 26) est réalisé pour établir une liaison à coopération de formes ou à coopération de forces entre la partie de réception (14) et la partie formant couvercle (16).

6. Pompe à vide selon la revendication 5,
**caractérisée en ce que** l'élément de liaison (20, 22, 24, 26) est réalisé pour former une liaison à coopération de formes avec la partie de réception (14) et/ou avec la partie formant couvercle (16).

7. Pompe à vide selon la revendication 5 ou 6,
**caractérisée en ce que** l'élément de liaison (20, 22, 24, 26) est susceptible d'être relié à la partie de réception (14) et/ou à la partie formant couvercle (16) dans différentes positions angulaires.

8. Pompe à vide selon l'une des revendications 5 à 7,
**caractérisée en ce que** l'élément de liaison (20, 22, 24, 26), en particulier semblable à une tige, est réalisé pour former une liaison à coopération de formes aussi bien avec la partie de réception (14) qu'avec la partie formant couvercle (16), et la partie de réception (14) et/ou la partie formant couvercle (16) comporte un ou plusieurs évidements (28, 29) agencés dans différentes positions angulaires pour l'élément de liaison (20, 22, 24, 26).

9. Pompe à vide selon l'une des revendications 5 à 8,
**caractérisée en ce que** l'élément de liaison (20, 22, 24, 26) est susceptible d'être fixé sur la partie de réception (14) ou sur la partie formant couvercle (16) dans différentes positions angulaires via une liaison à trou oblong, et est susceptible d'être relié à l'autre partie respective (16, 14) par coopération de formes.

10. Pompe à vide selon l'une des revendications 5 à 9,
**caractérisée en ce que** l'élément de liaison (20, 22, 24, 26) inclut une vis au moyen de laquelle la partie de réception (14) et la partie formant couvercle (16) sont serrées l'une avec l'autre dans la position de consigne.

11. Pompe à vide selon l'une des revendications précédentes,
**caractérisée en ce que** le moyen de sécurisation (18) agit dans la région d'une collerette (30) en dépassement radial de la partie de réception (14) ou de la partie formant couvercle (16).

12. Pompe à vide selon l'une des revendications précédentes,
**caractérisée en ce que** la partie de réception (14) et la partie formant couvercle (16) déterminent, dans la position de consigne, une position libre pour le palier rotatif (12).

13. Monture-palier (10) pour un palier rotatif, en particulier d'une pompe à vide selon l'une des revendications précédentes, comprenant une partie de réception (14) et une partie formant couvercle (16), qui sont capables de tourner l'une par rapport à l'autre, en particulier par vissage, et qui, au moins dans une position de consigne, délimitent conjointement une chambre de réception pour le palier rotatif (12),
dans laquelle il est prévu un moyen de sécurisation (18) pour établir une liaison mécanique entre la partie de réception (14) et la partie formant couvercle (16), laquelle empêche une rotation réciproque de la partie de réception (14) et de la partie formant couvercle (16) dans la position de consigne,
**caractérisée en ce que** le moyen de sécurisation (18) inclut au moins un élément de liaison (20, 22, 24, 26), qui est susceptible d'être relié simultanément aussi bien à la partie de réception (14) qu'à la partie formant couvercle (16).

14. Monture-palier (10) selon la revendication 13,
**caractérisée par** les éléments caractéristiques de l'une des revendications 2 à 12.

15. Procédé pour établir une monture-palier (10) pour un palier rotatif (12), en particulier d'une pompe à vide avec les caractéristiques de l'une des revendications 1 à 12, dans lequel la monture-palier (10) inclut une partie de réception (14) et une partie formant couvercle (16), qui sont capables de tourner l'une par rapport à l'autre, en particulier par vissage, et qui délimitent conjointement, au moins dans une position de consigne, une chambre de réception pour le palier rotatif (12),
dans lequel la partie de réception (14) et la partie formant couvercle (16) sont tournées l'une par rapport à l'autre et sont amenées grâce à cela dans la position de consigne, et en ce que l'on établit ensuite dans la position de consigne une liaison mécanique entre la partie de réception (14) et la partie formant couvercle (16), qui empêche une rotation réciproque de la partie de réception (14) et de la partie formant couvercle (16),
**caractérisé en ce que** la liaison mécanique est établie par au moins un élément de liaison (20, 22, 24, 26), qui est relié simultanément aussi bien à la partie de réception (14) qu'à la partie formant couvercle.
